# EUROPEAN PATENT SPECIFICATION

(11) **EP 3 566 237 B1**
(45) Date of publication and mention of the grant of the patent: **17.08.2022**
(21) Application number: 18736094.6
(22) Date of filing: 03.01.2018
(51) Int. Cl.: H01B 7/32, H01B 7/36, H01R 4/10, H01R 4/14, H01R 4/18, H01R 4/20, H02G 15/22, H02G 15/23, C09K 9/02, G01K 1/02, G01K 11/12, G09F 3/00, G09F 23/00, H02G 3/32

(54) **TEMPERATURE SENSITIVE COLOR CHANGING ELECTRICAL DEVICE**
TEMPERATUREMPFINDLICHE FARBWECHSELNDE ELEKTRISCHE VORRICHTUNG
DISPOSITIF ÉLECTRIQUE CHANGEANT DE COULEUR SENSIBLE À LA TEMPÉRATURE

(30) Priority: 04.01.2017 WO PCT/CN2017/070111; 04.01.2017 US 201762442139 P
(43) Date of publication of application: 13.11.2019
(73) Proprietor: ABB Schweiz AG, 5400 Baden (CH)
(72) Inventor: GAO, Yan, Memphis, TN 38119 (US); LI, Nan, Beijing 102218 (CN); CHEN, Jiansheng, Beijing 100024 (CN); SU, Cuicui, Beijing 100102 (CN); WANG, Ding, Beijing 100085 (CN); QIAO, Bo, Beijing 100029 (CN)
(74) Representative: Maiwald Patent- und Rechtsanwaltsgesellschaft mbH
(86) International application number: PCT/US2018/012198
(87) International publication number: WO 2018/129054

(56) References cited:
- WO-A1-2009/113443
- WO-A1-2009/113443
- DE-A1-102013 007 301
- DE-A1-102013 007 301
- US-A- 4 963 415
- US-A1- 2002 170 739
- US-A1- 2002 170 739
- US-A1- 2005 109 984
- US-A1- 2005 109 984
- US-A1- 2010 234 494
- US-A1- 2011 097 948
- US-A1- 2011 248 224
- US-B1- 7 256 348

## Description

This application claims priority from U.S. provisional application Serial No. 62/442,139, filed on January 4, 2017, and PCT International Application No. PCT/CN2017/070111, filed on January 4, 2017.

### TECHNICAL FIELD

The present disclosure relates to devices or components used in conjunction with electrical equipment, such as electrical cables or wires, and, more particularly, to electrical devices that visually indicate an unsafe condition.

### BACKGROUND

It is often important, if not necessary, to monitor the temperature of electrical equipment, such as electrical cables or wires, since an abnormal temperature may indicate, for example, an electric overload condition. Such condition may result in a failure of the electrical equipment and may further pose a danger to anyone who may handle the equipment.

In some applications, a conventional thermal monitor mechanism is placed near the electrical equipment to monitor the surrounding temperature. The monitor mechanism can be a thermometer that monitors the environment (e.g., room), or an infrared device that monitors the surface temperature profile of a specific region (e.g., cables themselves or cable cabinet).

Electrical cables and wires are typically provided with components or devices that insulate and facilitate connection and handling of the cables and wires. Such components or devices include cable ties that bundle groups of cables or wires together and cable connectors that enable a cable to be connected to another cable or to another electrical component.

A common cable tie or tie-wrap, also known as a hose tie, zap-strap or zip tie, is normally made of a polymeric material and has a tape section with teeth that engages with a pawl in the head to form a ratchet so that, as the free end of the tape section is pulled, the tie-wrap tightens and does not come undone. Another version of the tie-wrap allows a tab to be depressed to either adjust the tension or remove the tie-wrap. Another popular design of the cable tie locking mechanism involves a metallic barb in the head slot.

A cable connector is typically used to connect two wires or conductors in an electrical circuit. One common type of connector is a ring terminal having a copper barrel-ring component that can be mechanically crimped to the end of a wire, and a plastic sleeve that surrounds and insulates the crimped connection. The plastic sleeve can be molded from thermoplastic materials, such as nylon, pvc, ETFE (Tefzel), etc. The terminal connector can be color coded for different crimp size, for example, with red, blue, and yellow colors.

In both cases, the heat generated during electricity conduction can accumulate due to the insulating characteristics of the polymeric material that houses the conductors. While the polymeric material of the cable tie or cable connector helps to prevent electrical shortage or personal injury, the polymer material limits the heat dissipation and increases the chance of unwanted temperature rise in the conducting cable. Such temperature increase in the conducting cable can cause electrical resistivity to increase, which further increases the heat generation leading to cable overheating and potential catastrophic melting or other hazardous.

Recent developments with thermochromic materials have resulted in the production of cable ties and cable connectors made from materials that will change color when subjected to a temperature change. When made from such thermochromic materials, such cable ties and cable connectors provide automatic visible indication of a potential hazardous overheating condition.

However, the color range of these thermochromic materials is limited such that it is not always possible for the device to change to a desired alerting color in order to identify specific conditions.

Accordingly, it would be desirable to provide a means for monitoring the temperature of electrical devices, such as cable ties and cable connectors, and for providing a visual indication that an unsafe condition has occurred. It would be further desirable to provide such visual indication in the form of text and/or images so as to specify the unsafe condition. An electrical device with a visual monitoring over the temperature will provide an additional value to the electrical device.

Prior art relating to a thermochromic electrical device is known, for instance, from US 2002/170739 A1, DE 10 2013 007301 A1 and WO 2009/113443 A1.

### SUMMARY

The present invention provides a thermochromic electrical device including the features of claim 1. The thermochromic electrical device is made of thermochromic plastic material and has a visual indicator pre-printed with regular print or ink to allow visible warning of a scalding situation when the thermochromic plastic portion fades from its original color to leave the warning visible. The electric device may be any one of, for example, a cable tie, a cable connector, a terminal connector, a splice connector, and a cable jacket.

The electrical device generally includes a body comprising a thermochromic material having a first color at a first temperature and a second color at a second temperature, wherein the second color differs from the first color. A visual indicator is supported by the body. The visual indicator has a color substantially matching the first color of the thermochromic material, wherein the visual indicator becomes visible when the thermochromic material changes to the second color to indicate a change in temperature of the electrical device.

The visual indicator may comprise an ink printed on an external surface of the body. The visual indicator may comprise text or a pictorial image.

The electrical device may take the form of a cable tie comprising an elongate strap, a head attached to a first end of the strap and a locking device disposed in an aperture of the head. The locking device is configured to permit a second end of the strap opposite the head to be inserted through the head aperture in a first direction and is further configured to prevent movement of the second end of the strap from the head aperture in a second direction opposite the first direction. In this form, the visual indicator is supported by at least one of the strap or the head.

The electrical device may take the form of a terminal connector comprising an electrically conductive component and an electrically insulating sleeve. The component has a first end adapted for crimped electrical connection to a conductor wire and a second end opposite the first end and the electrically insulating sleeve surrounds at least the first end of the electrically conductive component. In this form, the visual indicator is supported by the sleeve.

The electrical device is made of a thermochromic polymer composition that comprises a base polymer material, a temperature sensitive material, which changes a color of the thermochromic polymer composition in response to a temperature change and a stabilizer, which enhances stability performance of the thermochromic polymer composition.

The stabilizer can be any type of stabilizer which can enhance the stability performance of the thermochromic polymer composition, especially the stability performance of the temperature sensitive material. However, in an embodiment of the present disclosure, the stabilizer comprises a heat stabilizer which can enhance heat stabilization performance. In another embodiment of the present disclosure, the stabilizer may comprise a light stabilizer, which can enhance outdoor stabilization performance, resistant to the UV light. In a further embodiment of the present disclosure, the stabilizer may comprise both the heat stabilizer and the light stabilizer.

A process for preparing the thermochromic polymer composition may include mixing the base polymer material, the temperature sensitive material and the stabilizer in a mechanical mixing process to obtain a mixed material, extruding the mixed material in an extrusion process to form an extrudant, and cutting the extrudant to obtain the thermochromic polymer composition as a masterbatch.

As a result of the present invention, an electrical device that provides a visual indicator of an unsafe operating condition is provided. The device may be made from a new thermochromic formulation, which undergoes a rapid and obvious color change in response to the variations in temperature. Thus, it could provide a visual indication of the existence of abnormal temperature increases. In this way, users can be warned and accidents will be avoided at an early stage. Therefore, maintenance cost of the electrical device formed from this thermochromic polymer composition can be reduced, and scald at a hot surface could be avoided, and thus the electrical device may add an appealing value to customer applications.

Features of the disclosure will become apparent from the following detailed description considered in conjunction with the accompanying drawings. It is to be understood, however, that the drawings are designed as an illustration only and not as a definition of the limits of this disclosure.

### BRIEF DESCRIPTION OF THE DRAWINGS

Figure 1 shows, in section, an exemplary cable tie of the prior art, having a head containing an aperture and locking mechanism and an extending strap, with the strap inserted into the head.
Figure 2a shows a first embodiment of an electrical device formed in accordance with the present invention in the form of a cable tie in a normal state.
Figure 2b shows the cable tie of Figure 2a in an overheated state.
Figure 3a shows a second embodiment of an electrical device formed in accordance with the present invention in the form of a ring terminal in a normal state.
Figure 3b shows the ring terminal of Figure 3a in an overheated state.
Figure 4 schematically illustrates a flow chart of a process for preparing the thermochromic polymer composition as a masterbatch according to an embodiment of the present disclosure.
Figure 5 schematically illustrates a flow chart of a process for forming an electric device from the thermochromic polymer composition as a masterbatch according to an embodiment of the present disclosure.

### DETAILED DESCRIPTION OF PREFERRED EMBODIMENTS

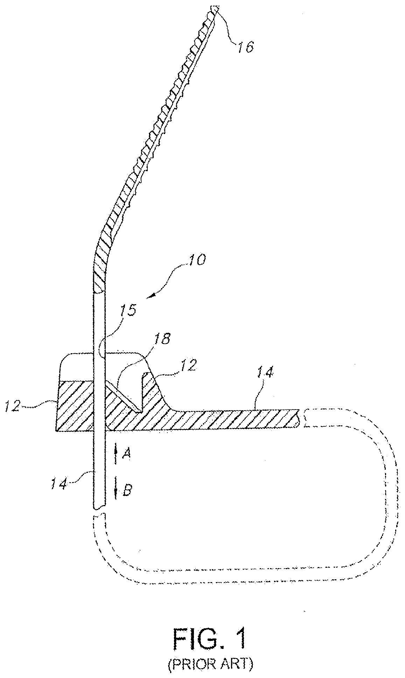

Referring first to Figure 1, a cable tie 10 of the prior art is shown for reference. However, as mentioned above and as will be discussed in further detail below, the present invention is not limited to cable ties, but can be applied to many different electrical devices and components made from a base polymeric material.

The cable tie 10 of the prior art is typically an elongate molded plastic member, which is used in a manner described above to wrap around a bundle of articles (not shown in Figure 1). The cable tie 10 is typically made from a plastic composition and includes a head 12 at one end thereof, a tail 16 at the other end of the head and a generally planar strap 14 therebetween. In the illustrative embodiment provided, the head 12 is formed as an integral portion of the cable tie 10. However, in certain applications the cable tie 10 may be constructed in a manner where the head 12 is formed separately from the strap 16.

The head 12 of the cable tie 10 includes an aperture 15 therethrough (shown with the strap 14 therein) for insertably accommodating the tail 16 and passage of the strap 14 therein in a first direction "A." The head 12 of cable tie 10 typically includes a locking device 18 supported by the head 12 and extending into the aperture. The locking device 18 permits insertion of the strap 14 in the first direction "A" and prevents substantial movement of the strap 14 in a second direction "B" opposite the first direction upon an attempt to withdraw the strap 14 from the aperture. The locking device may include a metallic barb such as shown in U.S. Patent No. 5,513,421, or an integrally formed plastic pawl such as shown in U.S. Patent No. 7,017,237.

The present invention involves a cable tie similar in most respects to the prior art cable tie described above. However, according to the present invention, the cable tie is made from a thermochromic material and is provided with a visual indicator that becomes visible when the thermochromic material changes color upon experiencing a change in temperature.

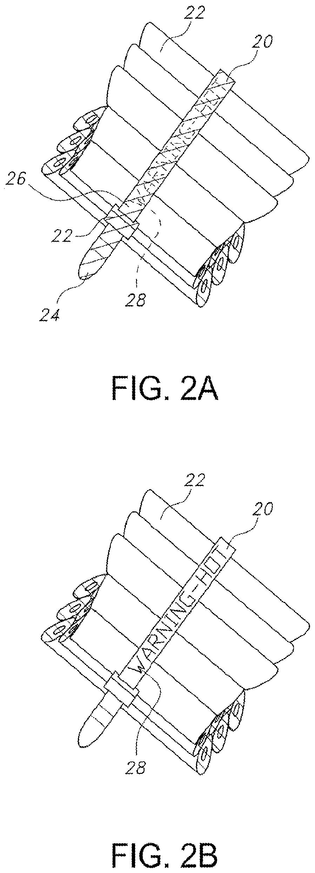

Figures 2a and 2b show an electrical device according to a first embodiment of the present invention in the form of a cable tie 20 wrapped around a bundle of wires 22. The cable tie 20 of the present invention is similar in most respects to the prior art cable tie 10 described above. Thus, the cable tie 20 includes a head 22 at one end thereof, a tail 24 at the other end of the head and a generally planar strap 26 therebetween. The head 22 includes an aperture for insertion of the tail 24 in a first direction, and further includes a locking device (not shown in Figures 2a and 2b) that prevents withdrawal of the strap 26.

As will be discussed in further detail below, the cable tie 20 is made from a compound including a base material and a thermochromic material such that the cable tie exhibits a first color at a first (e.g., ambient) temperature T₁, as shown in Figure 2a. The cable tie 20 further includes a visual indicator 28 having a color that matches the first color of the cable tie at the first temperature T₁. As a result, the visual indicator 28 is not visible when the cable tie 20 is at the first temperature T₁.

The visual indicator 28 can take various forms, such as text or pictorial images. Moreover, the visual indicator 28 can comprise a conventional ink provided on any convenient surface of the cable tie 20, for example, by printing. It is also conceivable that the visual indicator 28 can be embedded or otherwise encapsulated by the material forming the cable tie 20.

In use, when the bundle of wires 22 reaches a predetermined threshold temperature T₂, as determined by the temperature necessary to change the color of the thermochromic material of the cable tie 20, the color of the cable tie 20 will change, thereby revealing the printed visual indicator 28, as shown in Fig. 2b.

In a preferred embodiment, the color change completes in 0.1 second to 30 minutes, once the changing temperature is reached. In another embodiment, the color change action completes in 1 second to 10 seconds. In still another embodiment, the color change action completes in 40 seconds to 200 seconds.

Other aspects of the present invention will be further described in the following examples:

### EXAMPLE 1

In one aspect of the invention, the cable tie 20 is formed of a polypropylene masterbatch concentrate. The concentrate is compounded based on semitransparent LyondellBasell Pro-Fax SD-242 with 12wt% "Green-Colorless" thermochromic pigment (provided by New Prismatic Enterprise Co., Ltd), 12wt% Irganox1010 antioxidant additive (by BASF) and 12wt% UV-001 light stabilizer (Ampacet). The masterbatch concentrate compound is extruded and cut into uniform pellet material format.

A prototype cable tie was fabricated via the injection molding of regular polypropylene pellet material Pro-Fax SD-242 and the masterbatch concentrate mixed at a ratio of 11:1 by weight. The resulting cable tie is designed to contain 1wt% "Green-Colorless" thermochromic pigment, 1wt% Irganox1010 antioxidant additive and 1wt% UV-001 light stabilizer. The injection molding process was carried out without change to the process parameters when no masterbatch concentrate was used. A small stainless steel bar was inserted in the prototype cable tie using the same process for forming a conventional cable tie using regular polypropylene material. An external strap surface of the resulting cable tie was printed with text reading "WARNING" using a VideoJet Printer CIJ.1520 using a green paint V416-D.

The resulting cable tie prototype meets regular cable tie performance standards and also provides visible warning at temperature 49°C or above. The regular cable tie performance was tested against UL62275. The prototype cable tie, which is 7" long, passed type 1 classification tests for the ratings of 401b tensile strength at -40°C to 85°C operating temperature range for indoor use, which is the same rating of the cable tie without the additive masterbatch.

The cable tie was also placed in an oven to test its thermochromic capability under a heated environment. The cable tie was aged at 80°C for 1000 hours. After the aging, the cable tie still can change color to reveal the warning sign at 49°C or above.

In addition to UL testing, to verify the thermochromic capability, the cable tie is expected to pass a specific temperature-color transition test at 49°C nominal plus 3 minus 1. The test involves a controlled heating plate (SmartLab HP-202DU, 300 x 300 mm, error ±0.1 °C) that can increase or decrease the temperature by 1°C and maintain a plate temperature for 1 hours or longer. The heating plate is in a black box that prevents heat turbulence from atmosphere. When the thermochromic cable tie is placed flat on the heating plate surface in the black box, it should change color starting at 48°C and completing at 50°C, with a changing time within 10 seconds the plate temperature changes. When the temperature drops below 49°C, the cable tie changes its color back to green (reversible) and thus conceals the warning text, indicating the surface temperature becomes safe again for human skin contact.

The cable tie thus formed is expected to be installed in electrical wiring applications, such as utility cabinets, datacenters, or other controlled environments, and provide visual indication that the environment of the fastened wires or cables reaches a temperature that is 49°C or above which is a scalding hazard.

### EXAMPLE 2

It is also conceivable that the thermochromic cable tie can be made from other colored materials. The thermochromic cable tie can also be made with other base materials, such as nylon 6,6, nylon 4,6, and ETFE (Tefzel).

In this example, a cable tie was formed from a base material exhibiting a blue color at ambient temperature. The blue cable tie partially turns semi-transparent/milky white and reveals warning texts when dipped into a cup of hot water about below boiling point. The tail and part of the strap out of the hot water remains the original blue color where the warning texts are not visible.

### EXAMPLE 3

A green cable tie with pre-printed warning text that is not visible at or below 48°C is formed. The green cable tie will turn to semi-transparent/milky white color when the temperature is 49°C or higher. This green cable tie changes its color gradually to semitransparent/milky white when temperature rises from 44 °C to 54°C, and then changes the color back when the temperature decreases.

### EXAMPLE 4

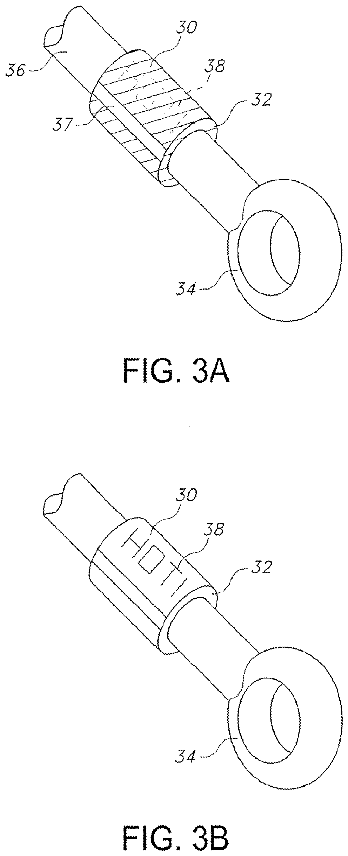

As mentioned above, the present invention is not limited to cable ties. Thus, in this example, an electrical device in the form of a ring terminal 30 is formed. A cable terminal connector 30, as is shown in Figures 3a and 3b, is typically used to connect two wires or conductors in an electrical circuit. Mechanical crimping is a typical method to secure the connection between the connector 30 and the conductors.

As is known in the art, the ring terminal 30 generally includes a sleeve 32 made from an insulating material, which encapsulates one end of a barrel-ring component 34 made from an electrically conductive material. The barrel end of the component 34 is encapsulated within the sleeve 32 and is crimped over a bare conductor of a wire 36. The opposite end of the component 34 can have the shape of an enclosed ring, as in the case of a ring terminal or a fork, as in the case of a fork terminal. It is also known in the art to provide the sleeve 32 with a colored stripe 37 on its outer surface to indicate the size of the crimped wire connection.

A typical barrel-ring component 34 is made of high purity copper alloy such as electrolytic tough pitch CDA 110. The copper barrel may also be plated with nickel or tin, as is known in the art.

However, according to the present invention, the plastic sleeve 32 is molded from a thermochromic plastic material that will provide the terminal with thermochromic capability. As described above, the thermochromic plastic material may be compounded with a base thermoplastic material, such as nylon, pvc, ETFE (Tefzel), etc. The sleeve 32 further includes a visual indicator 38 that becomes visible when the color of the sleeve changes upon a change in temperature.

Similar to the cable tie described above, the visual indicator 38 may be provided as a suitable ink or paint printed on the surface of sleeve 32. Alternatively, the visual indicator 38 can be embedded within the thermochromic plastic material forming the sleeve 32. In either case, the color of the ink or paint forming the visual indicator 38 matches the color of the thermochromic plastic material forming the sleeve 32 in a normal ambient temperature condition. The sleeve 32 also contains a red strip 37 of plastic through the sleeve length.

When the terminal connector 30 is energized, it actively detects overheat over 90°C. At this limit temperature, the thermochromic sleeve 32 will change color or become transparent. The color indicator 38 will then no longer match the original color of the sleeve 32 and will, therefore, become clearly visible with respect to the sleeve 32. Moreover, the material of the sleeve 32 will not change back to its original color when the terminal temperature drops back to normal range, such as 25°C, so that the poor electrical connection can be readily discovered.

The thermochromic enabled terminal connector is expected to meet performance requirements currently under UL486A and UL586B. In addition, the terminal is expected to pass a specific temperature-color transition test at 90°C. The test involves a controlled heating plate that can increase or decrease the temperature by 1°C and maintain a plate temperature for 1 hour or longer. The heating plate is in a black box that prevents heat turbulence from atmosphere. When the thermochromic terminal is placed on the heating plate surface in the black box, its thermochromic material should change color starting at 88°C and completing at 94°C, with a changing time within 10 seconds the plate temperature changes.

### EXAMPLE 5

Conventional thermochromic materials may be used with the present invention. These materials may include for example, ink, paint, particles, or other substance sensitive to a temperature change. However, such conventional materials have often shown weaknesses, such as long-term instability, and weak resistance to the environment and the like. Thus, in the present disclosure, there is provided a new thermochromic formulation, which can be used for, but not limited to, electrical devices.

In an embodiment of the present disclosure, there is provided a thermochromic formulation, which is also called as the thermochromic polymer material, may include a base polymer material, a temperature sensitive material, and a stabilizer. The base polymer material is a polymer matrix, which may be any type of polymer suitable for the object electrical device (such as cable tie, a cable connector, a terminal connector, a splice connector, a cable jacket, etc.). The temperature sensitive material can be a thermochromic pigment, which can be a microcapsule protected type of pigment and have reversible or semi-reversible color change property. The stabilizer may include for example, heat stabilizer like antioxidant stabilizer, a light stabilizer or both thereof so as to enhance stability performance and/or the thermochromic polymer composition.

The weight ratio of the temperature sensitive material to the total stabilizer may be from 1:0.1 to 1:10, and preferably, 1:1 to 1:6.

In an embodiment of the present disclosure, the base polymer composition may comprise any one of polypropylene (PP), polyamide (PA, nylon), polytetrafluoroethylene (PTFE, Teflon), poly(ethene-co-tetrafluoroethene)(ETFE, Tefzel), polyetheretherketone (PEEK), poly(chlorotrifluoethylene-ethylene) (ECTFE), polyethylene (PE), acetal, thermoplastic polyurethane (TPU), polyvinyl chloride (PVC), polyethylene terephthalate (PET), polyvinylidene difluoride (PVDF), copolymers thereof, or combination thereof.

The temperature sensitive material may comprise one or more temperature sensitive materials with an irreversible, a semi-reversible or a reversible color change. The one or more temperature sensitive materials with a semi-reversible or reversible color change may have one or more threshold temperatures ranging from about -10°C to about 70°C. In embodiments involving an irreversible color change, the one or more temperature sensitive materials may have one or more threshold temperatures ranging from about -40°C to about 300°C. For an electrical device such as cable tie, it is intended to indicate a temperature increase that has a scald hazardous to the human skin touch. According to American Burn Association, 49°C (120°F) is recommended as the temperature that could cause skin scald in short contact. Thus, in this case, 49°C may be determined as the threshold temperature for the thermochromic polymer material. A series of microcapsule protected color-changing pigments with comparable threshold temperature was selected and examined. In an example of the present disclosure, the "Green-Colorless" pigment provided by New Prismatic Enterprise Co., Ltd. can be used as the desired color-changing pigment.

The stabilizer can be employed as auxiliary ingredients to the temperature sensitive material. The added stabilizer is used to keep the microcapsuled pigment stable especially during the high-temperature process of injection molding, and facilitate the color change sensitivity of the resulted cable tie.

The heat stabilizer may comprise any one or more of a hindered phenol antioxidant, a phosphite ester antioxidant and a thiosynergist material. The hindered phenol antioxidant comprises any one or more of pentaerythritol tetrakys 3-(3,5-ditert- butyl -4-hydroxyphenyl) propionate (Irganox1010), dibutylhydroxyphenylpropionic acid stearyl ester (Irganox1076), 2,6-Di-tert-butyl-4-methylphenol (Irganox264), calcium bis(monoethyl (3,5-di-tert-butyl-4-hydroxylbenzyl)phosphonate) (Irganox1425). The phosphite ester antioxidant comprises any one or more of tris(2,4-di-t-butylphenyl)phosphite(Irgafos 168), and bis-(2,4-di-tert-butyl-pheny)- phosphiterythritol diphosphite(Ultranox 626). The thiosynergist materials comprises 2,4 -bis(dodecylthiomethyl)-6-methylphenol (RC1726) , 2-Methyl-4,6-bis((octylthio) methyl)phenol (Irganox 1520).

Another possible alternative or additional additive is the light stabilizer which may enhance the stability performance when the polymer material is used outdoor. The light stabilizer may comprise any one or more of an ultraviolet light screening agent, an ultraviolet absorbent, a light quenching agent, and a radical scavenger. The ultraviolet light screening agent may comprise one or more of carbon black, zinc oxide, and titanium dioxide. The ultraviolet absorbent may comprise for example benzophenone, benzotriazole, and triazine. The light quenching agent may comprise for example nickel compounds; wherein the radical scavenger comprises one or more of bis(2,2,6,6-tetramethyl-4-piperidyl) sebacate, benzoic acid (2,2,6,6-tetramethyl -4-piperidine) ester, etc.

A total amount of the temperature sensitive material is important for the resulting thermochromic polymer material to obtain a desired color change. In one embodiment of the present disclosure, for the thermochromic polymer composition as a masterbatch, the temperature sensitive material may range from about 1 wt% to about 30 wt %, based on the total weight of the thermochromic polymer composition. In another embodiment of the present disclosure, for the thermochromic polymer composition as a final composition formed from a masterbatch, a total amount of the temperature sensitive material may be from about 0.01 wt% to about 20%, preferably from about 0.1 wt% to about 10 wt %, and more preferably about 1 wt% to about 5 wt%, based on the total weight of the thermochromic polymer composition.

In addition, inventors observed that the color change performance had close correlation to content of the stabilizer. In an embodiment of the present disclosure, for the thermochromic polymer composition as a masterbatch, a total amount of the stabilizer may range from about 1 wt% to about 30wt%, and preferably about 1 wt% to about 5wt%, based on the total weight of the thermochromic polymer composition. Whereas, for the thermochromic polymer composition as a final composition formed from a masterbatch, a total amount of the stabilizer may range from about 0.1 wt% to about 10%, and preferably about 1wt% to about 5wt%, based on the total weight of the thermochromic polymer composition.

In another aspect, there is further provided an electrical device comprising the thermochromic polymer composition as provided herein. The electrical device can be for example, any one of a cable tie, a cable connector, a terminal connector, a splice connector, a cable jacket, etc. However, these example electrical devices are only given for illustrative purposes and the present disclosure is not limited thereto, the thermochromic polymer composition can be used to form other electrical device than those listed.

In a further aspect, there is also provided use of the thermochromic polymer composition as provided herein in an electric device. The electric device may comprise use in any one of a cable tie, a cable connector, a terminal connector, a splice connector, and a cable jacket. However, the skilled in the art shall understand that these example uses are only given for illustrative purposes and the present disclosure is not limited thereto, the thermochromic polymer composition can also be used to form other electrical device than those listed, or any other devices.

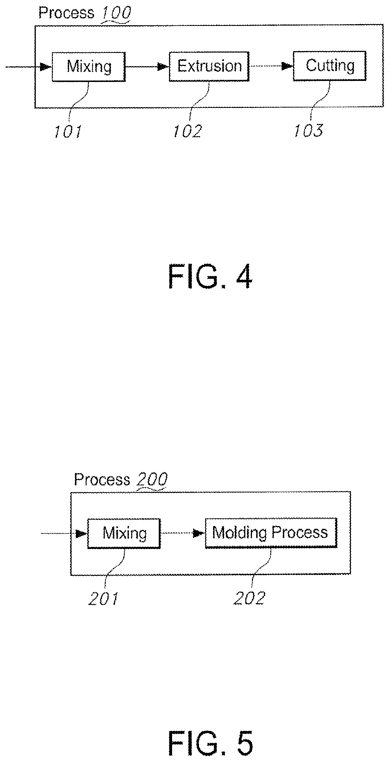

In a further aspect, there is provided a process for preparing the thermochromic polymer composition as provided herein. For illustrative purposes, reference will be made to Fig. 4 to describe the preparation process, wherein Fig. 4 illustrates an example process for preparing the thermochromic polymer composition according to an embodiment of the present disclosure.

As illustrated in Fig. 4, the process 100 may start from a mixing sub-process 101, in which the base polymer material, the temperature sensitive material and the stabilizer are mixed together in a mechanical mixing process to obtain a mixture. Then, in an extrusion sub-process 102, the mixture may be further extruded in an extrusion process to form an extrudant. In a cutting sub-process, the extrudant may be then cut into small particulars to obtain the thermochromic polymer composition as a masterbatch. In such a way, it is possible to obtain the masterbatch which can be further diluted by the base polymer material to form the final electrical product as desired, like a cable tie, a cable connector, a terminal connector, a splice connector, and a cable jacket.

Hereinafter, a process for forming an electric device from the masterbatch will be described with reference to Fig. 5, which schematically illustrates a flow chart of a process for forming an electric device from the thermochromic polymer composition as a masterbatch according to an embodiment of the present disclosure. As illustrated in Fig. 5, the process 200 may start from a mixing sub-process 201, in which the thermochromic polymer composition as a materbatch is mixed with a predetermined amount of base polymer material in a mechanical mixing process. Then, in a molding sub-process 202, the mixed composition can be processed to obtain the final electrical device. The molding sub-process 202 may comprise any one of: an injection molding, an extrusion molding, a calender molding, and a thermoforming molding, which can be selected based on requirements of different cases. In the process 200, the electric device may comprise any one of a cable tie, a cable connector, a terminal connector, a splice connector, a cable jacket or any other electrical device.

Hereinafter, examples of the thermochromic polymer composition will be described to examine its technical effect. Through the examples and test result comparisons, the skilled in the art will realize technical effects of the thermochromic polymer composition as provided in the present disclosure. In the following, tests are performed on an example electrical device, i.e., the cable tie to show the effect of the thermochromic polymer composition. However, it shall be noted that all these examples are given for illustrative purposes and are not intended to limit the present disclosure in any way. For example, the electrical device can also be any other electrical device like a cable connector, a terminal connector, a splice connector, or a cable jacket in addition to the cable tie.

### EXAMPLE 5A

The mixing of PP pellets (SD-242) and temperature sensitive fillers were carried out with a GH-10DY high-speed mixer from Beijing INT Plastics Machinery General Factory. Then, the masterbatch was prepared by using a SK-26 twin-screw extruder (its screw diameter was 26 mm; its screw L/D ratio was 44) from Keya Chemical Industry Complete Equipment Co., Ltd, the content of temperature sensitive fillers in PP matrix was in a range of 1wt to 30wt%. The extrusion temperature was in a range of 180°C-280°C.

The resulted masterbatch pellets were further diluted by pure PP pellets (the diluted temperature sensitive content was in a range of 0.01wt -20 wt %). Then, the cable tie samples were produced by diluted pellets in an injection molding. The injection was performed by using a PT-130 injection machine (its screw diameter is 40 mm, its screw L/D ratio is 22.5) from L.K. machinery Co., Ltd. The injection temperature was in a range of 180°C-300°C. Color changing-tests were performed on a SmartLab HP-303DU hot-plate with size 300 X 300 X 10mm (the temperature fluctuation was about ±0.1°C). Thermochromic cable tie samples were put on the middle part of the hot-plate when heating up the hot-plate. The hot-plate was placed in a black photo cabin to prevent heat turbulence from the atmosphere. The heating or cooling rate was around 0.5 °C/min. During the heating or cooling process, pictures were taken for every degree centigrade of temperature change to record the color changing phenomenon.

The thermal analysis measurements were performed by means of DSC (differential scanning calorimetry) measurement to measure the melting temperature(Tm) and the crystallization temperature (Tc). For a DSC measurement, a sample (about 5 to 10 mg) was heated from about 40°C to about 210°C at a scanning rate of 50°C/min under a nitrogen atmosphere, and was held there for 5 minutes to eliminate the thermal history. Then the sample was cooled to 40 °C at a scanning rate of 10 °C/min to examine its crystallization behavior. In addition, the sample was also heated at a scanning rate of 10 °C/min to test its melting behavior.

The example cable ties as provided in these Examples were intended to indicate temperature increase that had scald hazardous to the human skin touch. According to American Burn Association, 49°C (120°F) is recommended as the temperature that could cause skin scald in short contact. Thus, in these examples, 49°C was determined as the threshold temperature for the thermochromic formulation. A series of microcapsule protected color-changing pigment with comparable threshold temperature was selected and examined. The "Green-Colorless" pigment provided by New Prismatic Enterprise Co., Ltd. was finally confirmed as an example desired color-changing pigment. However, it shall be appreciated that the present disclosure is not only limited to this pigment and it is also possible to use any other pigment with any color.

Example Group 1 included eleven examples, i.e., Examples 1 to 11. In Example Group 1, the pigment content was about 1wt% based on the total weight of the cable tie.

In Example 1, the thermochromic polymer composition contained a base polymer material of polypropylene (PP, SD-242), a "Green-Colorless" pigment (as a temperature sensitive material) provided by New Prismatic Enterprise Co., Ltd., and a heat stabilizer which is antioxidant Irganox1010 which had a hindered phenolic molecular structure.

In the cable tie, the pigment was about 1wt%, and the antioxidant Irganox1010 was about 1wt% based on the total weight of the cable tie.

Examples 2 to 4 were similar to Example 1 except that the antioxidant Irganox1010 had different contents. In Example 2, the antioxidant Irganox1010 was about 3wt% based on the total weight of the cable tie; in Example 3, the antioxidant Irganox1010 was about 5wt% based on the total weight of the cable tie; and in Example 4, the antioxidant Irganox1010 was about 10wt% based on the total weight of the cable tie. The contents of respective ingredients of Examples 1 to 4 are given in Table 1.

**Table 1 Contents of respective ingredients of Examples 1 to 4**

| **No.** | **Ingredients** | **Pigment content** | **1010 content** | **UV-001 content** |
|---|---|---|---|---|
| Example 1 | PP/Pigment/1010 | 1 wt% | 1 wt% | - |
| Example 2 | PP/pigment/1010 | 1 wt% | 3 wt% | - |
| Example 3 | PP/pigment/1010 | 1 wt% | 5 wt% | - |
| Example 4 | PP/pigment/1010 | 1 wt% | 10 wt% | - |

In Example 5, the thermochromic polymer composition contained a base polymer material of polypropylene (PP, SD-242), a "Green-Colorless" pigment (as a temperature sensitive material) provided by New Prismatic Enterprise Co., Ltd., and a light stabilizer UV-001 which has a hindered amine molecules.

In the cable tie, the pigment was about 1wt%, and the light stabilizer UV-001 was about 1wt% based on the total weight of the cable tie.

Examples 6 to 8 were similar to Example 5 except that the light stabilizer UV-001 had different contents. In Example 6, the light stabilizer UV-001 was about 3wt% based on the total weight of the cable tie; in Example 7, the light stabilizer UV-001 was about 5wt% based on the total weight of the cable tie; and in Example 8, the light stabilizer UV-001 was about 10wt% based on the total weight of the cable tie. The contents of respective ingredients of Examples 5 to 8 are given in Table 2.

**Table 2 Contents of respective ingredients of Examples 5 to 8**

| **No** | **Ingredients** | **Pigment content** | **1010 content** | **UV-001 content** |
|---|---|---|---|---|
| Example 5 | PP/Pigment/UV-001 | 1 wt% | - | 1 wt% |
| Example 6 | PP/pigment/UV -001 | 1 wt% | - | 3 wt% |
| Example 7 | PP/pigment/UV -001 | 1 wt% | - | 5 wt% |
| Example 8 | PP/pigment/UV -001 | 1 wt% | - | 10 wt% |

In Example 9, the thermochromic polymer composition contained a base polymer material of polypropylene (PP, SD-242), a "Green-Colorless" pigment (as a temperature sensitive material) provided by New Prismatic Enterprise Co., Ltd., antioxidant Irganox1010 (as a heat stabilizer) which has a hindered phenolic molecular structure, and a light stabilizer UV-001 which has a hindered amine molecules.

In the cable tie, the pigment was about 1wt%, the antioxidant Irganox1010 was about 0.5 wt% and the light stabilizer UV-001 was about 0.5wt% based on the total weight of the cable tie.

Examples 10 to 11 were similar to Example 9 except that the antioxidant Irganox1010 and the light stabilizer UV-001 had different contents. In Example 10, the antioxidant Irganox1010 was about 1 wt% and the light stabilizer UV-001 was about 1wt% based on the total weight of the cable tie; and in Example 11, the antioxidant Irganox1010 was about 3wt% and the light stabilizer UV-001 was about 3wt% based on the total weight of the cable tie. The contents of respective ingredients of Examples 9 to 11 are given in Table 3.

**Table 3 Contents of respective ingredients of Examples 9 to 11**

| **No** | **Ingredients** | **Pigment content** | **1010 content** | **UV-001 content** |
|---|---|---|---|---|
| Example 9 | PP/Pigment/1010+UV-001 | 1 wt% | 0.5 wt% | 0.5 wt% |
| Example 10 | PP/Pigment/1010+UV-001 | 1 wt% | 1 wt% | 1 wt% |
| Example 11 | PP/Pigment/1010+UV-001 | 1 wt% | 3 wt% | 3 wt% |

Example Group 2 includes six examples, i.e., Examples 12 to 17. In Example Group 2, the pigment content was about 3wt% based on the total weight of the cable tie.

In Example 12, the thermochromic polymer composition contained a base polymer material of polypropylene (PP, SD-242), a "Green-Colorless" pigment (as a temperature sensitive material) provided by New Prismatic Enterprise Co., Ltd., and antioxidant Irganox1010 (as a heat stabilizer) which has a hindered phenolic molecular structure.

In the cable tie, the pigment was about 3wt%, and the antioxidant Irganox1010 was about 1 wt% based on the total weight of the cable tie.

Example 13 was similar to Example 12 except that the antioxidant Irganox1010 had a different content. In Example 13, the antioxidant Irganox1010 was about 5wt% based on the total weight of the cable tie. The contents of respective ingredients of Examples 12 to 13 are given in Table 4.

**Table 4 Contents of respective ingredients of Examples 12 to 13**

| **No** | **Ingredients** | **Pigment content** | **1010 content** | **UV-001 content** |
|---|---|---|---|---|
| Example 12 | PP/pigment/1010 | 3 wt% | 1 wt% | - |
| Example 13 | PP/pigment/1010 | 3 wt% | 5 wt% | - |

In Example 14, the thermochromic polymer composition contained a base polymer material of polypropylene (PP, SD-242), a "Green-Colorless" pigment (as a temperature sensitive material) provided by New Prismatic Enterprise Co., Ltd., and a light stabilizer UV-001 which has a hindered amine molecules.

In the cable tie, the pigment was about 3wt%, and the light stabilizer UV-001 was about 1wt% based on the total weight of the cable tie.

Example 15 was similar to Example 14 except that the light stabilizer UV-001 had a different content. In Example 15, the light stabilizer UV-001 was about 5wt% based on the total weight of the cable tie. The contents of respective ingredients of Examples 14 to 15 are given in Table 5.

**Table 5 Contents of respective ingredients of Examples 14 to 15**

| **No** | **Ingredients** | **Pigment content** | **1010 content** | **UV-001 content** |
|---|---|---|---|---|
| Example 14 | PP/pigment/1010 | 3 wt% | - | 1 wt% |
| Example 15 | PP/pigment/1010 | 3 wt% | - | 5 wt% |

In Example 16, the thermochromic polymer composition contained a base polymer material of polypropylene (PP, SD-242), a "Green-Colorless" pigment (as a temperature sensitive material) provided by New Prismatic Enterprise Co., Ltd., antioxidant Irganox1010 (as a heat stabilizer) which has a hindered phenolic molecular structure, and a light stabilizer UV-001 which has a hindered amine molecules.

In the cable tie, the pigment was about 3wt%, the antioxidant Irganox1010 was about 0.5 wt% and the light stabilizer UV-001 was about 0.5wt% based on the total weight of the cable tie.

Example 17 was similar to Example 16 except that the antioxidant Irganox1010 and the light stabilizer UV-001 had different contents. In Example 17, the antioxidant Irganox1010 was about 3 wt% and the light stabilizer UV-001 was about 3wt% based on the total weight of the cable tie. The contents of respective ingredients of Examples 16 to 17 are given in Table 6.

**Table 6 Contents of respective ingredients of Examples 16 to 17**

| **No** | **Ingredients** | **Pigment content** | **1010 content** | **UV-001 content** |
|---|---|---|---|---|
| Example 16 | PP/pigment/1010+UV-001 | 3 wt% | 0.5 wt% | 0.5 wt% |
| Example 17 | PP/pigment/1010+UV-001 | 3 wt% | 3 wt% | 3 wt% |

Example Group 3 included four examples, i.e., Examples 18 to 21. In Example Group 3, the pigment content was about 5wt% based on the total weight of the cable tie.

In Example 18, the thermochromic polymer composition contained a base polymer material of polypropylene (PP, SD-242), a "Green-Colorless" pigment (as a temperature sensitive material) provided by New Prismatic Enterprise Co., Ltd., and antioxidant Irganox1010 (as a heat stabilizer) which has a hindered phenolic molecular structure.

In the cable tie, the pigment was about 5wt%, and the antioxidant Irganox1010 was about 5 wt% based on the total weight of the cable tie. The contents of respective ingredients of Example 18 are given in Table 7.

**Table 7 Contents of respective ingredients of Example 18**

| **No** | **Ingredients** | **Pigment content** | **1010 content** | **UV-001 content** |
|---|---|---|---|---|
| Example 18 | PP/pigment/1010 | 5 wt% | 5 wt% | - |

In Example 19, the thermochromic polymer composition contained a base polymer material of polypropylene (PP, SD-242), a "Green-Colorless" pigment (as a temperature sensitive material) provided by New Prismatic Enterprise Co., Ltd., and a light stabilizer UV-001 which has a hindered amine molecules.

In the cable tie, the pigment was about 5wt%, and the light stabilizer UV-001 was about 5wt% based on the total weight of the cable tie. The contents of respective ingredients of Example 19 are given in Table 8.

**Table 8 Contents of respective ingredients of Example 19**

| **No** | **Ingredients** | **Pigment content** | **1010 content** | **UV-001 content** |
|---|---|---|---|---|
| Example 19 | PP/pigment/1010 | 5 wt% | - | 5 wt% |

In Example 20, the thermochromic polymer composition contained a base polymer material of polypropylene (PP, SD-242), a "Green-Colorless" pigment (as a temperature sensitive material) provided by New Prismatic Enterprise Co., Ltd., antioxidant Irganox1010 (as a heat stabilizer) which has a hindered phenolic molecular structure, and a light stabilizer UV-001 which has a hindered amine molecules.

In the cable tie, the pigment was about 5wt%, the antioxidant Irganox1010 was about 2.5 wt% and the light stabilizer UV-001 was about 2.5wt% based on the total weight of the cable tie.

Example 21 was similar to Example 20 except that the antioxidant Irganox1010 and the light stabilizer UV-001 had different contents, wherein in Example 21, the antioxidant Irganox1010 was about 5 wt% and the light stabilizer UV-001 was about 5wt% based on the total weight of the cable tie. The contents of respective ingredients of Examples 20 and 21 are given in Table 9.

**Table 9 Contents of respective ingredients of Examples 20 to 21**

| **No** | **Ingredients** | **Pigment content** | **1010 content** | **UV-001 content** |
|---|---|---|---|---|
| Example 20 | PP/pigment/1010+UV-001 | 5 wt% | 2.5 wt% | 2.5 wt% |
| Example 21 | PP/pigment/1010+UV-001 | 5 wt% | 5 wt% | 5 wt% |

In Example Group 4, the pigment content was about 0.1wt% based on the total weight of the cable tie and it included Examples 22 to 25.

In Example 22, the thermochromic polymer composition contained a base polymer material of polypropylene (PP, SD-242), a "Green-Colorless" pigment (as a temperature sensitive material) provided by New Prismatic Enterprise Co., Ltd., and antioxidant Irganox1010 (as a heat stabilizer) which has a hindered phenolic molecular structure.

In the cable tie, the pigment was about 0.1wt%, and the antioxidant Irganox1010 was about 0.1 wt% based on the total weight of the cable tie. The contents of respective ingredients of Example 22 are given in Table 10.

**Table 10 Contents of respective ingredients of Example 22**

| **No** | **Ingredients** | **Pigment content** | **1010 content** | **UV-001 content** |
|---|---|---|---|---|
| Example 22 | PP/pigment/1010 | 0.1 wt% | 0.1 wt% | - |

In Example 23, the thermochromic polymer composition contained a base polymer material of polypropylene (PP, SD-242), a "Green-Colorless" pigment (as a temperature sensitive material) provided by New Prismatic Enterprise Co., Ltd., and a light stabilizer UV-001 which has a hindered amine molecules.

In the cable tie, the pigment was about 0.1wt%, the light stabilizer UV-001 was about 0.1wt% based on the total weight of the cable tie. The contents of respective ingredients of Example 23 are given in Table 11.

**Table 11 Contents of respective ingredients of Example 23**

| **No** | **Ingredients** | **Pigment content** | **1010 content** | **UV-001 content** |
|---|---|---|---|---|
| Example 23 | PP/pigment/1010 | 0.1 wt% | - | 0.1 wt% |

In Example 24, the thermochromic polymer composition contained a base polymer material of polypropylene (PP, SD-242), a "Green-Colorless" pigment (as a temperature sensitive material) provided by New Prismatic Enterprise Co., Ltd., antioxidant Irganox1010 (as a heat stabilizer) which has a hindered phenolic molecular structure, and a light stabilizer UV-001 which has a hindered amine molecules.

In the cable tie, the pigment was about 0.1wt%, the antioxidant Irganox1010 was about 0.1 wt% and the light stabilizer UV-001 was about 0.1 wt% based on the total weight of the cable tie.

Example 25 was similar to Example 24 except that the antioxidant Irganox1010 and the light stabilizer UV-001 had different contents. In Example 21, the antioxidant Irganox1010 was about 0.5 wt% and the light stabilizer UV-001 was about 0.5wt% based on the total weight of the cable tie. The contents of respective ingredients of Examples 24 and 25 are given in Table 12.

**Table 12 Contents of respective ingredients of Examples 24 to 25**

| **No** | **Ingredients** | **Pigment content** | **1010 content** | **UV-001 content** |
|---|---|---|---|---|
| Example 24 | PP/pigment/1010+UV-001 | 0.1 wt% | 0.1 wt% | 0.1 wt% |
| Example 25 | PP/pigment/1010+UV-001 | 0.1 wt% | 0.5 wt% | 0.5 wt% |

Example Group 5 included four examples, i.e., Examples 26 to 29. In Example Group 5, the pigment content was about 10wt% based on the total weight of the cable tie.

In Example 26, the thermochromic polymer composition contained a base polymer material of polypropylene (PP, SD-242), a "Green-Colorless" pigment (as a temperature sensitive material) provided by New Prismatic Enterprise Co., Ltd., and antioxidant Irganox1010 (as a heat stabilizer) which has a hindered phenolic molecular structure.

In the cable tie, the pigment was about 10 wt%, and the antioxidant Irganox1010 was about 10wt% based on the total weight of the cable tie. The contents of respective ingredients of Example 26 are given in Table 13.

**Table 13 Contents of respective ingredients of Example 26**

| **No** | **Ingredients** | **Pigment content** | **1010 content** | **UV-001 content** |
|---|---|---|---|---|
| Example 26 | PP/pigment/1010 | 10 wt% | 10 wt% | - |

In Example 27, the thermochromic polymer composition contained a base polymer material of polypropylene (PP, SD-242), a "Green-Colorless" pigment (as a temperature sensitive material) provided by New Prismatic Enterprise Co., Ltd., and a light stabilizer UV-001 which has a hindered amine molecules.

In the cable tie, the pigment was about 10wt%, and the light stabilizer UV-001 was about 10wt% based on the total weight of the cable tie. The contents of respective ingredients of Example 27 are given in Table 14.

**Table 14 Contents of respective ingredients of Example 27**

| **No** | **Ingredients** | **Pigment content** | **1010 content** | **UV-001 content** |
|---|---|---|---|---|
| Example 27 | 10 wt% | 10 wt% | - | 10 wt% |

In Example 28, the thermochromic polymer composition contained a base polymer material of polypropylene (PP, SD-242), a "Green-Colorless" pigment (as a temperature sensitive material) provided by New Prismatic Enterprise Co., Ltd., antioxidant Irganox1010 (as a heat stabilizer) which has a hindered phenolic molecular structure, and a light stabilizer UV-001 which has a hindered amine molecules.

In the cable tie, the pigment was about 10 wt%, the antioxidant Irganox1010 was about 5wt% and the light stabilizer UV-001 was about 5wt% based on the total weight of the cable tie.

Example 29 was similar to Example 28 except that the antioxidant Irganox1010 and the light stabilizer UV-001 had different contents. In Example 29, the antioxidant Irganox1010 was about 10 wt% and the light stabilizer UV-001 was about 10 wt% based on the total weight of the cable tie. The contents of respective ingredients of Examples 28 and 29 are given in Table 15.

**Table 15 Contents of respective ingredients of Examples 28 to 29**

| **No** | **Ingredients** | **Pigment content** | **1010 content** | **UV-001 content** |
|---|---|---|---|---|
| Example 28 | PP/pigment/1010+UV-001 | 10 wt% | 5 wt% | 5 wt% |
| Example 29 | PP/pigment/1010+UV-001 | 10 wt% | 10 wt% | 10 wt% |

In order to show the effect of examples of the thermochromic polymer compositions as provided in the present disclosure, six comparison cases are prepared, wherein in Case 1 to 5, only pigment was added into the PP and in Case 6, the composition was pure PP. In cases 1 to 5, the pigments are about 1wt % , 3wt%, 5wt%, 0.1wt% and 10wt%, respectively, based on the total weight of the cable tie, which respectively have similar pigment contents to those examples in Example Group 1 to 5.

**Table 16 Contents of respective ingredients of comparison cases**

| **No** | **Ingredients** | **Pigment content** | **1010 content** | **UV-001 content** |
|---|---|---|---|---|
| Case 1 | PP/pigmen1 | 1 wt% | - | - |
| Case 2 | PP/pigmen1 | 3 wt% | - | - |
| Case 3 | PP/pigmen1 | 5 wt% | - | - |
| Case 4 | PP/pigmen1 | 0.1 wt% | - | - |
| Case 5 | PP/pigmen1 | 10 wt% | - | - |
| Case 6 | Pure PP | - | - | - |

The color-changing tests were performed on the above Example Groups 1 to 5 and Cases 1 to 5 under test conditions as described above.

Regarding Example Group 1 having a pigment content of 1wt% and Case 1 also having a pigment content of 1wt% based on the total weight of the cable tie, their color color-changing test results are illustrated in Table 17.

**Table 17 Color-changing test results of Examples Group 1 and Case 1**

| **No.** | **Heating** | | **Cooling** | |
|---|---|---|---|---|
| | **Start** | **Finish** | **Start** | **Finish** |
| Example 1 | 47 °C | 49 °C | 47 °C | 45 °C |
| Example 2 | 47 °C | 49 °C | 47 °C | 45 °C |
| Example 3 | 47 °C | 49 °C | 47 °C | 46 °C |
| Example 4 | 48 °C | 50 °C | 48 °C | 46 °C |
| Example 5 | 48 °C | 49 °C | 47 °C | 46 °C |
| Example 6 | 48 °C | 49 °C | 47 °C | 46 °C |
| Example 7 | 47 °C | 49 °C | 46 °C | 45 °C |
| Example 8 | 48 °C | 49 °C | 47 °C | 46 °C |
| Example 9 | 48 °C | 50 °C | 48 °C | 46 °C |
| Example 10 | 47 °C | 49 °C | 47 °C | 45 °C |
| Example 11 | 47 °C | 49 °C | 47 °C | 45 °C |
| Case 1 | 54 °C | 97 °C | 95 °C | 52 °C |

From the above color-changing test results, it can be seen that each of Examples 1 to 11 had a rapid and obvious color change at a temperature near a required threshold temperature 49° C. By contrast, Case 1 had a rather long color change process, which was rather slow responsive to temperature change. Thus, it is very hard for Case 1 to be used to indicate that the temperature reaches a predetermined temperature threshold, while Examples 1 to 11 has a good color changing performance, which could provide a visual indication of overheat condition and a warning of hazard.

Regarding Example Group 2 having a pigment content of 3wt% and Case 2 also having a pigment content of 3wt% based on the total weight of the cable tie, their color color-changing test results are illustrated in Table 18.

**Table 18 Color-changing test results of Example Group 2 and Case 2**

| **No.** | **Heating** | | **Cooling** | |
|---|---|---|---|---|
| | **Start** | **Finish** | **Start** | **Finish** |
| Example 12 | 48 °C | 50 °C | 47 °C | 45 °C |
| Example 13 | 48 °C | 50 °C | 48 °C | 46 °C |
| Example 14 | 48 °C | 49 °C | 47 °C | 46 °C |
| Example 15 | 49 °C | 50 °C | 48 °C | 46 °C |
| Example 16 | 48 °C | 50 °C | 48 °C | 46 °C |
| Example 17 | 48 °C | 50 °C | 47 °C | 46 °C |
| Case 2 | 55 °C | 98 °C | 96 °C | 53 °C |

From the above color-changing test results, it can be seen that each of Examples 12 to 17 also had a rapid and obvious color change at a temperature near a required threshold temperature 49° C. However, Case 3 had a rather long color change process, which was rather slow responsive to temperature change.

Regarding Example Group 3 having a pigment content of 5wt% and Case 3 also having a pigment content of 5wt% based on the total weight of the cable tie, their color color-changing test results are illustrated in Table 19.

**Table 19 Color-changing test results of Example Group 3 and Case 3**

| **No.** | **Heating** | | **Cooling** | |
|---|---|---|---|---|
| | **Start** | **Finish** | **Start** | **Finish** |
| Example 18 | 48 °C | 51 °C | 48 °C | 46 °C |
| Example 19 | 49 °C | 51 °C | 48 °C | 46 °C |
| Example 20 | 49 °C | 51 °C | 47 °C | 46 °C |
| Example 21 | 48 °C | 51 °C | 48 °C | 46 °C |
| Case 3 | 55 °C | 100 °C | 98 °C | 54 °C |

From the above color-changing test results, it can be seen that each of Examples 18 to 21 also had a rapid and obvious color change at a temperature near a required threshold temperature 49° C. However, Case 2 had a rather long color change process, which was rather slow responsive to temperature change.

Regarding Example Group 4 having a pigment content of 0.1wt% and Case 4 also having a pigment content of 0.1wt% based on the total weight of the cable tie, their color color-changing test results are illustrated in Table 20.

**Table 20 Color-changing test results of Example Group 4 and Case 4**

| **No.** | **Heating** | | **Cooling** | |
|---|---|---|---|---|
| | **Start** | **Finish** | **Start** | **Finish** |
| Example 22 | 46 °C | 48 °C | 46 °C | 45 °C |
| Example 23 | 47 °C | 48 °C | 47 °C | 46 °C |
| Example 24 | 47 °C | 49 °C | 47 °C | 45 °C |
| Example 25 | 47 °C | 49 °C | 47 °C | 45 °C |
| Case 4 | 52 °C | 96 °C | 94 °C | 51 °C |

From the above color-changing test results, it can be seen that each of Examples 22 to 25 also had a rapid and obvious color change at a temperature near a required threshold temperature 49 oC even though the pigment content is as low as 0.1 wt. However, Case 4 had a rather long color change process, which was rather slow responsive to temperature change.

Regarding Example Group 5 having a pigment content of 10wt% and Case 5 also having a pigment content of 10wt% based on the total weight of the cable tie, their color color-changing test results are illustrated in Table 21.

**Table 21 Color-changing test results of Example Group 5 and Case 5**

| **No.** | **Heating** | | **Cooling** | |
|---|---|---|---|---|
| | **Start** | **Finish** | **Start** | **Finish** |
| Example 26 | 49 °C | 52 °C | 49 °C | 47 °C |
| Example 27 | 50 °C | 51 °C | 49 °C | 47 °C |
| Example 28 | 49 °C | 51 °C | 48 °C | 46 °C |
| Example 29 | 50 °C | 52 °C | 49 °C | 47 °C |
| Case 5 | 57 °C | 101 °C | 100 °C | 55 °C |

From the above color-changing test results, it can be seen that each of Examples 26 to 29 also had a rapid and obvious color change at a temperature near a required threshold temperature 49 oC even though the pigment content is as low as 0.1 wt. However, Case 5 had a rather long color change process, which was rather slow responsive to temperature change.

The thermal performance tests were performed on Examples 1 to 29 and Case 6 (pure PP) under test conditions as described above.

Regarding Example Group 1 and Case 6, the thermal performance test results are illustrated in Table 22.

**Table 22 Thermal performance test results of Example Group 1 and Case 6**

| **No.** | **Thermal parameters** | |
|---|---|---|
| | **Tₘ (°C)** | **T_{c} (°C)** |
| Example 1 | 165.9 | 117.3 |
| Example 2 | 166.0 | 116.1 |
| Example 3 | 166.0 | 123.6 |
| Example 4 | 166.1 | 125.0 |
| Example 5 | 166.3 | 124.3 |
| Example 6 | 165.4 | 124.0 |
| Example 7 | 164.1 | 123.7 |
| Example 8 | 164.7 | 118.7 |
| Example 9 | 165.7 | 116.2 |
| Example 10 | 167.4 | 114.8 |
| Example 11 | 167.8 | 114.8 |
| Case 6 (pure PP) | 167.6 | 126.9 |

From the above thermal performance test results, it can be seen that each of Examples 1 to 11 in Example Group 1 has a similar melting temperature and a slightly decreased crystallization temperature compared to Case 6 (pure PP). In other words, the thermochromic PP as provided in each of Examples 1 to 11 does not change the thermal performance of the PP substantially and thus they can be used in electrical devices or any other devices just like the pure PP.

Regarding Example Group 2 and Case 6, the thermal performance test results are illustrated in Table 23.

**Table 23 Thermal performance test results of Example Group 2 and Case 6**

| **No.** | **Thermal parameters** | |
|---|---|---|
| | **Tₘ (°C)** | **T_{c} (°C)** |
| Example 12 | 166.5 | 117.1 |
| Example 13 | 167.1 | 117.4 |
| Example 14 | 166.3 | 118.6 |
| Example 15 | 165.5 | 117.9 |
| Example 16 | 166.1 | 116.9 |
| Example 17 | 166.5 | 116.8 |
| Case 6 (pure PP) | 167.6 | 126.9 |

The above thermal performance test results are similar to those in Table 22. From the above thermal performance test results, it can be seen that each of Examples 12 to 17 in Example Group 2 has a similar melting temperature and a slightly decreased crystallization temperature compared to Case 6 (pure PP). In other words, the thermochromic PP as provided in each of Examples 12 to 17 does not change the thermal performance of the PP substantially and thus they can be used in electrical devices or any other devices just like the pure PP.

Regarding Example Group 3 and Case 6, the thermal performance test results are illustrated in Table 24.

**Table 24 Thermal performance test results of Example Group 3 and Case 6**

| **No.** | **Thermal parameters** | |
|---|---|---|
| | **Tₘ (°C)** | **T_{c} (°C)** |
| Example 18 | 166.3 | 116.5 |
| Example 19 | 166.5 | 117.4 |
| Example 20 | 164.5 | 116.2 |
| Example 21 | 166.4 | 116.6 |
| Case 6 (pure PP) | 167.6 | 126.9 |

The above thermal performance test results are similar to those in Tables 22 and 23. From the thermal performance test results, it can be seen that each of Examples 18 to 21 in Example Group 3 has a similar melting temperature and a slightly decreased crystallization temperature compared to Case 6 (pure PP). In other words, the thermochromic PP as provided in each of Examples 18 to 21 does not change the thermal performance of the PP substantially and thus they can be used in electrical devices or any other devices just like the pure PP.

Regarding Example Group 4 and Case 6, the thermal performance test results are illustrated in Table 25.

**Table 25 Thermal performance test results of Example Group 4 and Case 6**

| **No.** | **Thermal parameters** | |
|---|---|---|
| | **Tₘ (°C)** | **T_{c} (°C)** |
| Example 22 | 167.5 | 126.0 |
| Example 23 | 167.3 | 126.2 |
| Example 24 | 167.2 | 125.7 |
| Example 25 | 167.3 | 125.1 |
| Case 6 (pure PP) | 167.6 | 126.9 |

The thermal performance test results are similar to those in Tables 22 to 24. From the thermal performance test results, it can be seen that each of Examples 22 to 25 in Example Group 4 has a similar melting temperature and a slightly decreased crystallization temperature compared to Case 6 (pure PP). In other words, the thermochromic PP as provided in each of Examples 22 to 25 does not change the thermal performance of the PP substantially and thus they can be used in electrical devices or any other devices just like the pure PP.

Regarding Example Group 5 and Case 6, the thermal performance test results are illustrated in Table 26.

**Table 26 Thermal performance test results of Example Group 5 and Case 6**

| **No.** | **Thermal parameters** | |
|---|---|---|
| | **Tₘ (°C)** | **(°C)** |
| Example 26 | 164.5 | 113.4 |
| Example 27 | 164.8 | 113.8 |
| Example 28 | 164.6 | 113.5 |
| Example 29 | 164.2 | 113.3 |
| Case 6 (pure PP) | 167.6 | 126.9 |

The thermal performance test results are similar to those in Tables 22 to 25. From the thermal performance test results, it can be seen that each of Examples 26 to 29 in Example Group 5 has a similar melting temperature and a slightly decreased crystallization temperature compared to Case 6 (pure PP). In other words, the thermochromic PP as provided in each of Examples 26 to 29 does not change the thermal performance of the PP substantially and t thus they can be also used in electrical devices or any other devices just like the pure PP.

By far, the present invention has been described with reference to the accompanying drawings through particular preferred embodiments. However, it should be noted that the present invention is not limited to the illustrated and provided particular embodiments. For example, the base material for forming the thermochromic polymer composition is not limited to PP, any other suitable material like those given hereinabove may also be used as the base polymer composition. The pigment is not limited to the "Green-Colorless" pigment provided by New Prismatic Enterprise Co., Ltd. either, and any other suitable pigment can be used as long as a desirable color change property can be achieved. The stabilizer is not limited to only the heat stabilizer, or the light stabilizer or both of them, any other stabilizer is also possible as long as it may enhance the stability of the composition and substantially keep its thermal performance. In addition, the heat stabilizer and the light stabilizer are not respectively limited to Irganox1010 and the light stabilizer UV-001 as well, any other suitable type of stabilizer can also be used as long as the stability of the composition can be enhanced and the thermal performance thereof can be substantially maintained. Although the specific process parameters are described in embodiments of the present disclosure, the present disclosure is not limited there to and any other parameters may be used as long as it can obtain the thermochromic polymer composition with desirable color change properties and thermal performance.

The term "comprising" as may be used in the following claims is an open-ended transitional term that is intended to include additional elements not specifically recited in the claims. The term "consisting essentially of' as may be used in the following claims is a partially closed transitional phrase and is intended to include the recited elements plus any unspecified elements that do not materially affect the basic and novel characteristics of the claims. For example, the cable tie may be embossed or printed with indicia and still be included in the meaning of "consisting essentially of', even if not specifically recited. The term "consisting of' as may be used in the following claims is intended to indicate that the claims are restricted to the recited elements.

It should be noted that it is envisioned that any feature, element or limitation that is positively identified in this document may also be specifically excluded as a feature, element or limitation of an embodiment of the present invention.

## Claims

1. An electrical device comprising:
a body (20, 30) comprising a thermochromic material, a composition of said thermochromic material comprising:
a base polymer material;
a temperature sensitive material that changes, in response to a temperature change of the body, a color of said thermochromic material from a first color at a first temperature and a second color at a second temperature, said second color differing from said first color; and
a stabilizer, wherein the composition has a weight percentage of the stabilizer relative to the total weight of the composition that accommodates the stabilizer enhancing a responsiveness of the temperature sensitive material in visually attaining the second color in response to the temperature change; and
a visual indicator (28, 38) supported by said body (20, 30), said visual indicator (28, 38) having a color substantially matching said first color of said thermochromic material,
wherein said visual indicator (28, 38) becomes visible when said thermochromic material changes to said second color to indicate a change in temperature of the electrical device.

2. The electrical device as defined in Claim 1, wherein the visual indicator (28, 38) comprises an ink printed on an external surface of said body; or
wherein said visual indicator (28, 38) comprises text or pictorial image; or
wherein said thermochromic material changes to said second color in 1 second to 10 seconds once the thermochromic material reaches said second temperature.

3. The electrical device as defined in Claim 1, wherein said body (20) is a cable tie (20) comprising:
an elongate strap (26);
a head (22) attached to a first end of said strap (26), said head (22) having an aperture formed therein; and
a locking device disposed in said aperture of said head (22), said locking device being configured to permit a second end of said strap (26) opposite said head (22) to be inserted through said head aperture in a first direction and being further configured to prevent movement of said second end of said strap (26) from said head aperture in a second direction opposite said first direction,
wherein said visual indicator (28) is supported by at least one of said strap (26) or said head (22).

4. The electrical device as defined in Claim 1, wherein said body (30) is a terminal connector (30) comprising:
an electrically conductive component (34) having a first end adapted for crimped electrical connection to a conductor wire (36) and a second end opposite said first end; and
an electrically insulating sleeve (32) surrounding at least said first end of said electrically conductive component (34),
wherein said visual indicator (38) is supported by said sleeve (32).

5. The electrical device as defined in Claim 4, wherein said visual indicator (38) comprises text or a pictorial image printed on an external surface of said sleeve (32); or
wherein said second end of said electrically conductive component (34) has a shape of an enclosed ring; or
wherein said second end of said electrically conductive component (34) has a shape of a fork; or
wherein said second end of said electrically conductive component (34) has a tubular barrel shape for housing of the conductor wire (36); or
wherein said sleeve (32) comprises a colored stripe (37) for indicating a size of the crimped connection.

6. The electrical device as defined in Claim 1, wherein said stabilizer, enhances stability performance of the thermochromic polymer composition.

7. The electrical device as defined in Claim 6, wherein the stabilizer comprises one or more of a heat stabilizer and a light stabilizer; or
wherein the weight ratio of the temperature sensitive material to the stabilizer is from 1:0.1 to 1:10; or
wherein the base polymer composition comprises any one of polypropylene (PP), polyamide (PA, nylon), polytetrafluoroethylene (PTFE, Teflon), poly(ethene-co-tetrafluoroethene) (ETFE, Tefzel), polyetheretherketone (PEEK), poly(chlorotrifluoethylene-ethylene) (ECTFE), polyethylene (PE), acetal, thermoplastic polyurethane (TPU), polyvinyl chloride (PVC), polyethylene terephthalate (PET), polyvinylidene difluoride (PVDF), copolymers thereof, or combination thereof.

8. The electrical device as defined in Claim 6, wherein the temperature sensitive material comprises one or more temperature sensitive materials with an irreversible, a semi-reversible or a reversible color change.

9. The electrical device as defined in Claim 8, wherein the one or more temperature sensitive materials with a semi-reversible or reversible color change have one or more threshold temperatures ranging from about -10°C to about 70°C, and wherein the one or more temperature sensitive materials with an irreversible color change have one or more threshold temperatures ranging from about -40°C to about 300°C.

10. The electrical device as defined in Claim 6, wherein the temperature sensitive material comprises one temperature sensitive material with a threshold temperature of about 49°C.

11. The electrical device as defined in Claim 7, wherein the heat stabilizer comprises any one or more of a hindered phenol antioxidant, a phosphite ester antioxidant and a thiosynergist material.

12. The electrical device as defined in Claim 11, wherein the hindered phenol antioxidant comprises any one or more of pentaerythritol tetrakys 3-(3,5-ditert- butyl -4-hydroxyphenyl) propionate, dibutylhydroxyphenylpropionic acid stearyl ester, 2,6-Di-tert-butyl-4-methylphenol, calcium bis(monoethyl (3,5-di-tert-butyl-4-hydroxylbenzyl)phosphonate); wherein the phosphite ester antioxidant comprises any one or more of tris(2,4-di-t-butylphenyl)phosphite, and bis-(2,4-di-tert-butyl-pheny)- phosphiterythritol diphosphite; or wherein the thiosynergist materials comprises 2,4 -bis(dodecylthiomethyl)-6-methylphenol, 2-Methyl-4,6-bis((octylthio) methyl)phenol.

13. The electrical device as defined in Claim 7, wherein the light stabilizer comprises any one or more of an ultraviolet light screening agent, an ultraviolet absorbent, a light quenching agent, and a radical scavenger.

14. The electrical device as defined in Claim 13, wherein the ultraviolet light screening agent comprises any one or more of carbon black, zinc oxide, and titanium dioxide, wherein the ultraviolet absorbent comprises benzophenone, benzotriazole, and triazine; wherein the light quenching agent comprises nickel compounds; wherein the radical scavenger comprises any one or more of bis (2,2,6,6-tetramethyl-4-piperidyl) sebacate, benzoic acid (2,2,6,6- tetramethyl-4- piperidine) ester.

15. The electrical device as defined in Claim 6, wherein a total amount of the temperature sensitive material is from about 1 wt% to about 30 wt %, based on the total weight of the thermochromic polymer composition as by masterbatch; or
wherein a total amount of the temperature sensitive material is from about 0.01 wt% to about 20%, based on the total weight of the thermochromic polymer composition as a composition formed from a masterbatch; or
wherein a total amount of the stabilizer is from about 1 wt% to about 30wt%, based on the total weight of the thermochromic polymer composition as a masterbatch; or
wherein a total amount of the stabilizer is from about 0.1 wt% to about 10%, based on the total weight of the thermochromic polymer composition as a composition formed from a masterbatch; or
wherein the electric device comprises any one of a cable tie, a cable connector, a terminal connector, a splice connector, and a cable jacket.

16. A process for preparing the thermochromic polymer composition according to Claim 6, comprising:
mixing the base polymer material, the temperature sensitive material and the stabilizer in a mechanical mixing process to obtain a mixed material;
extruding the mixed material in an extrusion process to form an extrudant; and
cutting the extrudant to obtain the thermochromic polymer composition as a masterbatch.

17. A process for forming an electric device from the thermochromic polymer composition according to Claim 6, comprising:
mixing the thermochromic polymer composition as a masterbatch with a predetermined amount of base polymer material in a mechanical mixing process; and
processing the mixed composition in a molding process to obtain the electrical device.

## Patentansprüche

1. Elektrische Vorrichtung, die umfasst:
einen Körper (20, 30), der ein thermochromes Material umfasst, wobei eine Zusammensetzung des thermochromen Materials umfasst:
ein Basispolymermaterial;
ein temperaturempfindliches Material, das in Reaktion auf eine Temperaturänderung des Körpers eine Farbe des thermochromen Materials von einer ersten Farbe bei einer ersten Temperatur zu einer zweiten Farbe bei einer zweiten Temperatur ändert, wobei sich die zweite Farbe von der ersten Farbe unterscheidet; und
einen Stabilisator, wobei die Zusammensetzung einen Gewichtsprozentsatz des Stabilisators im Verhältnis zum Gesamtgewicht der Zusammensetzung aufweist, der es ermöglicht, dass der Stabilisator eine Reaktionsfähigkeit des temperaturempfindlichen Materials bei der visuellen Erzielung der zweiten Farbe in Reaktion auf die Temperaturänderung verbessert; und
einen optischen Indikator (28, 38), der von dem Körper (20, 30) getragen wird, wobei der optische Indikator (28, 38) eine Farbe hat, die im Wesentlichen mit der ersten Farbe des thermochromen Materials übereinstimmt,
wobei der optische Indikator (28, 38) sichtbar wird, wenn das thermochrome Material in die zweite Farbe übergeht, um eine Temperaturänderung der elektrischen Vorrichtung anzuzeigen.

2. Elektrische Vorrichtung nach Anspruch 1, wobei der optische Indikator (28, 38) eine auf eine Außenfläche des Körpers gedruckte Tinte umfasst; oder
wobei der optische Indikator (28, 38) einen Text oder ein Piktogramm umfasst; oder
wobei das thermochrome Material innerhalb von 1 Sekunde bis 10 Sekunden in die zweite Farbe übergeht, sobald das thermochrome Material die zweite Temperatur erreicht.

3. Elektrische Vorrichtung nach Anspruch 1, wobei der Körper (20) ein Kabelbinder (20) ist, der umfasst:
ein längliches Band (26);
einen Kopf (22), der an einem ersten Ende des Bands (26) befestigt ist, wobei der Kopf (22) eine darin ausgebildete Öffnung aufweist; und
eine Verriegelungsvorrichtung, die in der Öffnung des Kopfs (22) angeordnet ist, wobei die Verriegelungsvorrichtung so konfiguriert ist, dass ein zweites Ende des Bands (26), das dem Kopf (22) gegenüberliegt, durch die Kopföffnung in einer ersten Richtung eingeführt werden kann, und ferner so konfiguriert ist, dass sie eine Bewegung des zweiten Endes des Bands (26) vom der Kopföffnung in einer der ersten Richtung entgegengesetzten zweiten Richtung verhindert,
wobei der optische Indikator (28) von dem Band (26) und/oder dem Kopf (22) getragen wird.

4. Elektrische Vorrichtung nach Anspruch 1, wobei der Körper (30) ein Anschlussverbinder (30) ist, der umfasst:
ein elektrisch leitendes Bauteil (34) mit einem ersten Ende, das für eine gecrimpte elektrische Verbindung mit einem Leiterdraht (36) geeignet ist, und einem zweiten Ende, das dem ersten Ende gegenüberliegt; und
eine elektrisch isolierende Hülse (32), die zumindest das erste Ende des elektrisch leitenden Bauteils (34) umgibt,
wobei der optische Indikator (38) von der Hülse (32) getragen wird.

5. Elektrische Vorrichtung nach Anspruch 4, wobei der optische Indikator (38) einen Text oder ein Piktogramm umfasst, der bzw. das auf eine Außenfläche der Hülse (32) gedruckt ist; oder
wobei das zweite Ende des elektrisch leitenden Bauteils (34) eine Form eines geschlossenen Rings hat; oder
wobei das zweite Ende des elektrisch leitenden Bauteils (34) eine Form einer Gabel hat; oder
wobei das zweite Ende des elektrisch leitenden Bauteils (34) eine röhrenförmige Trommelform zur Aufnahme des Leiterdrahtes (36) aufweist; oder
wobei die Hülse (32) einen farbigen Streifen (37) zur Anzeige der Größe der gecrimpten Verbindung aufweist.

6. Elektrische Vorrichtung nach Anspruch 1, wobei der Stabilisator eine Stabilitätsleistung der thermochromen Polymerzusammensetzung verbessert.

7. Elektrische Vorrichtung nach Anspruch 6, wobei der Stabilisator einen Wärmestabilisator und/oder einen Lichtstabilisator umfasst; oder
wobei das Gewichtsverhältnis zwischen dem temperaturempfindlichen Material und dem Stabilisator 1:0,1 bis 1:10 beträgt; oder
wobei die Basispolymerzusammensetzung Polypropylen (PP), Polyamid (PA, Nylon), Polytetrafluorethylen (PTFE, Teflon), Poly(ethen-co-tetrafluorethylen) (ETFE, Tefzel), Polyetheretherketon (PEEK), Poly(Chlortrifluorethylen-Ethylen) (ECTFE), Polyethylen (PE), Acetal, thermoplastisches Polyurethan (TPU), Polyvinylchlorid (PVC), Polyethylenterephthalat (PET), Polyvinylidendifluorid (PVDF), Copolymere davon oder Kombinationen davon umfasst.

8. Elektrische Vorrichtung nach Anspruch 6, wobei das temperaturempfindliche Material ein oder mehrere temperaturempfindliche(s) Material(ien) mit einer irreversiblen, einer halbreversiblen oder einer reversiblen Farbänderung umfasst.

9. Elektrische Vorrichtung nach Anspruch 8, wobei das eine oder die mehreren temperaturempfindliche(n) Material(ien) mit einer halbreversiblen oder reversiblen Farbänderung eine oder mehrere Schwellentemperaturen im Bereich von etwa -10°C bis etwa 70°C aufweist/aufweisen, und wobei das eine oder die mehreren temperaturempfindliche(n) Material(ien) mit einer irreversiblen Farbänderung eine oder mehrere Schwellentemperaturen im Bereich von etwa -40°C bis etwa 300°C aufweist/aufweisen.

10. Elektrische Vorrichtung nach Anspruch 6, wobei das temperaturempfindliche Material ein temperaturempfindliches Material mit einer Schwellentemperatur von etwa 49°C umfasst.

11. Elektrische Vorrichtung nach Anspruch 7, wobei der Wärmestabilisator ein gehindertes Phenol-Antioxidationsmittel, ein Phosphitester-Antioxidationsmittel und/oder ein thiosynergisches Material umfasst.

12. Elektrische Vorrichtung nach Anspruch 11, wobei das gehinderte Phenol-Antioxidationsmittel Pentaerythrittetrakys 3-(3,5-Di-tert-butyl-4-hydroxyphenyl)propionat, Dibutylhydroxyphenylpropionsäurestearylester, 2,6-Di-tert-butyl-4-methylphenol und/oder Calcium-bis(monoethyl-(3,5-di-tert-butyl-4-hydroxylbenzyl)phosphonate) umfasst; wobei das Phosphitester-Antioxidationsmittel Tris(2,4-di-tert-butylphenyl)phosphit und/oder Bis-(2,4-di-tert-butyl-pheny)-phos-phiterythritdiphosphit umfasst; oder wobei das thiosynergische Material 2,4-Bis(do-decylthiomethyl)-6-methylphenol, 2-Methyl-4,6-bis((octylthio) methyl)phenol umfasst.

13. Elektrische Vorrichtung nach Anspruch 7, wobei der Lichtstabilisator ein Ultraviolettlicht-Abschirmmittel, ein Ultraviolett-Absorptionsmittel, ein Lichtabschreckmittel und/oder einen Radikalfänger umfasst.

14. Elektrische Vorrichtung nach Anspruch 13, wobei das Ultraviolettlicht-Abschirmmittel Ruß, Zinkoxid und/oder Titandioxid umfasst, wobei das Ultraviolett-Absorptionsmittel Benzophenon, Benzotriazol und/oder Triazin umfasst; wobei das Lichtabschreckmittel Nickelverbindungen umfasst; wobei der Radikalfänger Bis(2,2,6,6- tetramethyl-4-piperidyl)sebacat und/oder Benzoesäure(2,2,6,6- tetramethyl-4-piperidin)ester umfasst.

15. Elektrische Vorrichtung nach Anspruch 6, wobei eine Gesamtmenge des temperaturempfindlichen Materials von etwa 1 Gew.-% bis etwa 30 Gew.-%, bezogen auf das Gesamtgewicht der thermochromen Polymerzusammensetzung als Masterbatch, beträgt; oder
wobei eine Gesamtmenge des temperaturempfindlichen Materials von etwa 0,01 Gew.-% bis etwa 20 %, bezogen auf das Gesamtgewicht der thermochromen Polymerzusammensetzung als eine aus einem Masterbatch gebildete Zusammensetzung, beträgt; oder
wobei eine Gesamtmenge des Stabilisators von etwa 1 Gew.-% bis etwa 30 Gew.-%, bezogen auf das Gesamtgewicht der thermochromen Polymerzusammensetzung als Masterbatch, beträgt; oder
wobei eine Gesamtmenge des Stabilisators von etwa 0,1 Gew.-% bis etwa 10 %, bezogen auf das Gesamtgewicht der thermochromen Polymerzusammensetzung als eine aus einem Masterbatch gebildete Zusammensetzung, beträgt; oder
wobei die elektrische Vorrichtung einen Kabelbinder, einen Kabelverbinder, einen Anschlussverbinder, einen Spleißverbinder und/oder einen Kabelmantel umfasst.

16. Verfahren zur Herstellung der thermochromen Polymerzusammensetzung nach Anspruch 6, das umfasst:
Mischen des Basispolymermaterials, des temperaturempfindlichen Materials und des Stabilisators in einem mechanischen Mischverfahren, um ein gemischtes Material zu erhalten;
Extrudieren des gemischten Materials in einem Extrusionsverfahren, um ein Extrudat zu bilden; und
Schneiden des Extrudats, um die thermochrome Polymerzusammensetzung als Masterbatch zu erhalten.

17. Verfahren zur Herstellung einer elektrischen Vorrichtung aus der thermochromen Polymerzusammensetzung nach Anspruch 6, das umfasst:
Mischen der thermochromen Polymerzusammensetzung als Masterbatch mit einer vorbestimmten Menge an Basispolymermaterial in einem mechanischen Mischverfahren; und
Verarbeiten der gemischten Zusammensetzung in einem Formverfahren, um die elektrische Vorrichtung zu erhalten.

## Revendications

1. Dispositif électrique comprenant :
un corps (20, 30) comprenant un matériau thermochromatique, une composition dudit matériau thermochromatique :
un matériau polymère de base ;
un matériau sensible à la température qui change, en réponse à un changement de température du corps, une couleur dudit matériau thermochromatique d'une première couleur à une première température et d'une seconde couleur à une seconde température, ladite seconde couleur étant différente de ladite première couleur; et
un stabilisateur, dans lequel la composition a un pourcentage en poids du stabilisateur associé au poids total de la composition qui loge le stabilisateur améliorant une réactivité du matériau sensible à la température en atteignant visuellement la seconde couleur en réponse au changement de température ; et
un indicateur visuel (28, 38) supporté par ledit corps (20, 30), ledit indicateur visuel (28, 38) ayant une couleur ayant une concordance de couleur avec ladite première couleur dudit matériau thermochromatique,
dans lequel ledit indicateur visuel (28, 38) devient visible lorsque ledit matériau thermochromatique se change en ladite seconde couleur pour indiquer un changement de température du dispositif électrique.

2. Dispositif électrique selon la revendication 1, dans lequel l'indicateur visuel (28, 38) comprend une encre imprimée sur une face externe dudit corps ; et
dans lequel ledit indicateur visuel (28, 38) comprend un texte ou une image picturale ; ou
dans lequel ledit matériau thermochromatique se change en ladite seconde couleur dans un laps de temps allant de 1 seconde à 10 secondes une fois que le matériau thermochromatique a atteint ladite seconde température.

3. Dispositif électrique selon la revendication 1, dans lequel ledit corps (20) est une attache de câble (20) comprenant :
une bande allongée (26) ;
une tête (22) fixée à une première extrémité de ladite bande (26), ladite tête (22) ayant une ouverture formée en son sein ; et
un dispositif de verrouillage disposé dans ladite ouverture de ladite tête (22), ledit dispositif de verrouillage étant conçu pour permettre à une seconde extrémité de ladite bande (26) opposée à ladite tête (22) d'être insérée à travers ladite ouverture de tête dans une première direction et étant en outre conçu pour empêcher le mouvement de ladite seconde extrémité de ladite bande (26) depuis ladite ouverture de tête dans une seconde direction opposée à ladite première direction,
dans lequel ledit indicateur visuel (28) est supporté par au moins l'une parmi ladite bande (26) et ladite tête (22).

4. Dispositif électrique selon la revendication 1, dans lequel ledit corps (30) est une borne d'extrémité (30) comprenant :
un composant électroconducteur (34) ayant une première extrémité adaptée pour se connecteur électriquement par un raccord serti à un câble de conducteur (36) et une seconde extrémité opposée à ladite première extrémité ; et
un manchon d'isolation électrique (32) entourant au moins ladite première extrémité dudit composant électroconducteur (34),
dans lequel ledit indicateur visuel (38) est supporté par ledit manchon (32).

5. Dispositif électrique selon la revendication 4, dans lequel l'indicateur visuel (38) comprend une encre imprimée sur une face externe dudit manchon (32) ; ou
dans lequel ladite seconde extrémité dudit composant électroconducteur (34) a la forme d'une bague fermée ; ou
dans lequel ladite seconde extrémité dudit composant électroconducteur (34) a la forme d'une fourche ; ou
dans lequel ladite seconde extrémité dudit composant électroconducteur (34) a la forme d'un cylindre tubulaire pour loger le câble de conducteur (36) ; ou
dans lequel ledit manchon (32) comprend une bande colorée (37) destinée à indiquer une taille du raccord serti.

6. Dispositif électrique selon la revendication 1, dans lequel ledit stabilisateur, améliore la performance de stabilité de la composition de polymère thermochromatique.

7. Dispositif électrique selon la revendication 6, dans lequel le stabilisateur comprend un ou plusieurs parmi un stabilisateur de chaleur et un stabilisateur de lumière ; ou
dans lequel le rapport massique entre le matériau sensible à la température et le stabilisateur est compris entre 1:0.1 et 1:10 ; ou
dans lequel la composition de polymère de base comprend l'un parmi le polypropylène (PP), le polyamide (PA, nylon), le polytétrafluoroéthylène (PTFE, Téflon), le poly(éthène-co-tétrafluoroéthène) (ETFE, Tefzel), le polyétherétherkétone (PEEK), le poly(chlorotrifluoéthylène-éthylène) (ECTFE), le polyéthylène (PE), l'acétal, le polyuréthane thermoplastique (TPU), le polychlorure de vinyle (PVC), le polyéthylène téréphtalate (PET), le difluorure de polyvinylidène (PVDF), leurs copolymères ou leur combinaison.

8. Dispositif électrique selon la revendication 6, dans lequel le matériau sensible à la température comprend un ou plusieurs matériaux sensible à la température présente un changement de couleur irréversible, semi-réversible ou réversible.

9. Dispositif électrique selon la revendication 8, dans lequel ledit ou lesdits matériaux sensible à la température présentant un changement de couleur irréversible, semi-réversible ou réversible ont une ou plusieurs températures seuil allant d'environ - 10°C à environ 70°C, et dans lequel ledit ou lesdits matériaux sensibles à la température ayant un changement de couleur irréversible ont une ou plusieurs températures seuil allant d'environ - 40°C à environ 300°C.

10. Dispositif électrique selon la revendication 6, dans lequel le matériau sensible à la température comprend un ou plusieurs matériaux sensible à la température présente une température seuil d'environ 49°C.

11. Dispositif électrique selon la revendication 7, dans lequel le stabilisateur de chaleur comprend un quelconque ou plusieurs parmi un antioxydant de phénol contrarié, un antioxydant d'ester de phosphite et un matériau thiosynergiste.

12. Dispositif électrique selon la revendication 11, dans lequel l'antioxydant phénolique contrarié comprend l'un quelconque ou plusieurs parmi le pentaérythritol tétrakys 3-(3,5-ditert- butyle -4-hydroxyphényl) propionate, ester d'alcool stéarique de dibutylhydroxyphénylpropionique, le 2,6-Di-tert-butyl-4-méthylphénol, calcium bis(monoéthyl (3,5-di-tert-butyl-4- hydroxylbenzyl)phosphonate) ; dans lequel l'antioxydant d'ester de phosphite comprend l'un quelconque ou plusieurs parmi le tris(2,4-di-t-butylphényl)phosphite, and bis-(2,4-di-tert-butyl-phény)-phosphiterythritol diphosphite ; ou dans lequel les matériaux thiosynergistes comprend du 2,4 -bis(dodécylthiométhyl)-6-méthylphénol, du 2-Méthyl-4,6-bis((octylthio) méthyl)phénol.

13. Dispositif électrique selon la revendication 7, dans lequel le stabilisateur de lumière comprend l'un quelconque ou plusieurs parmi un agent faisant écran à la lumière, un absorbant d'ultraviolet, un agent d'extinction de lumière et un capteur de radicaux.

14. Dispositif électrique selon la revendication 13, dans lequel l'agent faisant écran à la lumière comprend l'un quelconque ou plusieurs parmi du noir de carbone, l'oxyde de zinc, et le dioxyde de titane, dans lequel l'absorbant d'ultraviolet comprend du benzophénone, du benzotriazole, et de la triazine ; dans lequel l'agent de refroidissement de lumière comprend des composés de nickel ; dans lequel le capteur de radicaux comprend l'un quelconque ou plusieurs parmi le sébacate de bis (2,2,6,6- tétraméthyl-4-pipéridyl), de l'acide benzoïque (2,2,6,6- tétraméthyl-4-pipéridine).

15. Dispositif électrique selon la revendication 6, dans lequel une quantité totale du matériau sensible à la température est comprise entre environ 1 % en poids et environ 3 % en poids, sur la base du poids total de la composition de polymère thermochromatique comme mélange maître ; ou
dans lequel une quantité totale du matériau sensible à la température est comprise entre environ 0,01 % en poids et environ 20 % en poids, sur la base du poids total de la composition de polymère thermochromatique comme une composition formée à partir d'un mélange maître ; ou
dans lequel une quantité totale du stabilisateur est comprise entre environ 1 % en poids et environ 30 % en poids, sur la base du poids total de la composition de polymère thermochromatique comme mélange maître ; ou
dans lequel une quantité totale du stabilisateur est comprise entre environ 0,1 % en poids et environ 10 % en poids, sur la base du poids total de la composition de polymère thermochromatique comme une composition formée à partir d'un mélange maître ; ou
dans lequel le dispositif électrique comprend l'un quelconque parmi une attache de câble, un connecteur de câble, un connecteur de borne, un manchon connecteur et une gaine de câble.

16. Procédé de préparation de la composition de polymère thermochromatique selon la revendication 6, consistant à :
mélanger le matériau de polymère de base, le matériau sensible à la température et le stabilisateur dans un processus de mélange mécanique pour obtenir un matériau mélangé :
extruder le matériau mélangé dans un processus d'extrusion pour former un extrudat ; et
couper l'extrudat pour obtenir la composition de polymère thermochromatique en tant que mélange maître.

17. Procédé de formation d'un dispositif électrique à partir de la composition de polymère thermochromatique selon la revendication 6, consistant à :
mélanger la composition de polymère thermochromatique en tant que mélange maître ayant une quantité prédéfinie de matériau polymère de base dans un processus de mélange mécanique ; et
traiter la composition mélangée dans un processus de moulage pour obtenir le dispositif électrique.
